# EUROPÄISCHE PATENTSCHRIFT

(11) **EP 3 012 987 B1**
(45) Veröffentlichungstag und Bekanntmachung des Hinweises auf die Patenterteilung: **28.02.2018**
(21) Anmeldenummer: 15020198.6
(22) Anmeldetag: 22.10.2015
(51) Int. Cl.: H04J 3/06, G07C 1/22

(54) **VERFAHREN ZUR ZEITMESSUNG IM SPORT**
METHOD FOR TIME MEASUREMENT IN SPORTS
PROCÉDÉ DE MESURE DU TEMPS EN SPORT

(30) Priorität: 23.10.2014 DE 102014115451
(43) Veröffentlichungstag der Anmeldung: 27.04.2016
(73) Patentinhaber: Alge-Timing GmbH, 6890 Lustenau (AT); clownfish information technology GmbH, 6912 Hörbranz (AT)
(72) Erfinder: Alge, Wolfgang, 6890 Lustenau (AT); Auer, Wolfgang, 6890 Lustenau (AT); Ritschel, Patrick, 6912 Hörbranz (AT)
(74) Vertreter: Heyerhoff Geiger & Partner Patentanwälte PartGmbB

(56) Entgegenhaltungen:
- US-A- 5 887 029
- US-A1- 2008 075 217
- US-A1- 2012 025 944

## Beschreibung

Die Erfindung betrifft ein Verfahren und System zur Zeitmessung im Sport, bei dem ein Startgerät und ein Zielgerät über ein latenzbehaftetes Kommunikationsnetzwerk miteinander synchronisiert werden durch eine zeitgenaue Ausgabe eines Signals.

In vielen Bereichen von Industrie und Technik werden technische Systeme mittels moderner Kommunikationstechnik vernetzt, insbesondere über das Internet. Das Ermöglichen einer zentralen Steuerung, Regelung und Automation von komplexen dezentralen Prozessen ist dabei nur als ein Treiber dieser Entwicklung zu nennen.

Um eine technisch sinnvolle zentrale Prozessführung zu ermöglichen, ist insbesondere die zeitliche Synchronisierung der dezentralen Systeme bzw. der Netzwerkteilnehmer von Bedeutung. Aus dem Stand der Technik ist eine Vielzahl von Verfahren zur zeitlichen Synchronisierung von Netzwerkteilnehmern bekannt, beispielsweise ein nach IEEE 1588 standardisiertes Verfahren.

Eine nach IEEE 1588 synchronisierte Netzwerkumgebung ist aus der US 2008/0075217 A1 bekannt. In der US5887029 ist ein industrielles Netzwerk beschrieben, bei dem ein Triggerereignis einen Vorgang in einer Maschine auslösen soll. Der Vorgang soll eine vorbestimmte Zeit nach dem Triggerereignis stattfinden. Um dies zu erreichen, wird die vorgegeben Zeit groß genug gewählt, um eine Zeitreserve zu haben, sodass der Vorgang auch dann pünktlich ist, wenn die Nachricht vom Triggerereignis verzögert an die Maschine übermittelt wird.

Insbesondere für Anwendungen, die eine Implementierung einer Synchronisierungsinfrastruktur in einen vorhandenen zu vernetzenden oder vernetzten Gerätebestand erfordern, sind weitergehenden Ansätze wünschenswert. Als ein Beispiel für solche Anwendungen lassen sich die Vernetzung und der zeitsynchrone Betrieb von Zeiterfassungsgeräten für Sportwettkampfveranstaltungen nennen. Solche Geräte sind üblicherweise am Start, am Ziel und gegebenenfalls auch an Zwischenzielen einer Wettkampfstrecke postiert und informationstechnisch miteinander vernetzt. Die Strecke zwischen den Geräten kann bei bestimmten Wettkämpfen, beispielsweise bei Skirennen, so groß sein, dass eine kabelbasierte Vernetzung der Geräte mit unerwünschtem Aufwand verbunden ist. Es ist deshalb wünschenswert, eine kabellose Vernetzung und eine dementsprechende Synchronisationsinfrastruktur zwischen den Geräten herzustellen.

Ein solches kabelloses Netzwerk ist aus der US 2012/0025944 A1 bekannt. Zwischen einem Start und einem Ziel einer Laufstrecke sind mehrere Zwischenzeitnehmer angeordnet, die durch RFIDs Läufer erkennen und die Zeiten nehmen, zu denen die Läufer die Zwischenzeitnehmer passieren.

Es ist eine Aufgabe der Erfindung, ein in einer bestehenden Endgeräteumgebung aufwandsgünstig durchführbares Verfahren zur zeitgenauen Ausgabe eines Signals anzugeben.

Diese Aufgabe wird mit einem Verfahren der eingangs genannten Art gelöst, bei dem erfindungsgemäß aus einer Anzahl von Endgeräten des Netzwerks ausgegeben wird zwei Netzwerkgeräte, die zwischen dem Startgerät und dem Zielgerät angeordnet und über ein latenzbehaftetes, drahtloses Kommunikationsnetzwerk miteinander verbunden sind, eine Kommunikation über das Kommunikationsnetzwerk aufbauen zum Zweck der zeitlichen Synchronisation ihrer Systemzeituhren auf eine Systemzeit, indem eines der Netzwerkgeräte ein Suchsignal in das Kommunikationsnetzwerk sendet, auf das das andere Netzwerkgerät erwidert, die Netzwerkgeräte die Synchronisierung über das latenzbehaftete Kommunikationsnetzwerk übernehmen und eine Systemzeituhr des ersten Netzwerkgeräts und eine Systemzeituhr des zweiten Netzwerkgeräts über das Kommunikationsnetzwerk auf eine gemeinsame Systemzeit synchronisieren, wobei ein Systemzeitwert vom ersten Netzwerkgerät über das Kommunikationsnetzwerk zum zweiten Netzwerkgerät geleitet wird und das Signal unter Verwendung - insbesondere der gemeinsamen Systemzeit und - des Systemzeitwerts und eines Verzögerungszeitwerts, der größer als eine Latenz des Kommunikationsnetzwerks ist, durch zumindest eines der Netzwerkgeräte zeitgenau an das Zielgerät des Netzwerks ausgegeben wird.

Die Erfindung geht dabei von der Überlegung aus, dass eine Synchronisierung von weit voneinander entfernten Geräten aufwändig ist, sowohl eine Synchronisierung mit einer kabellosen Übertragungsstrecke, als auch mit einer Kabelverbindung über eine weite Strecke, z.B. über das Internet. Eine kabelgebundene Synchronisierung erfolgt üblicherweise standardisiert nach dem allgemein bekannten und verwendeten Standard IEEE 1588. Doch hierfür ist eine vergleichsweise aufwändige Hardware- und Softwareausstattung der zu synchronisierenden Geräte notwendig. Eine Synchronisierung mit einer kabellosen Übertragungsstrecke kann analog zu IEEE 1588 erfolgen, erfordert jedoch ebenfalls eine vergleichsweise aufwändige Hardware- und Softwareausstattung der zu synchronisierenden Geräte. So sind beispielweise ein Startgerät und ein Zielgerät bei einem Wettlauf mit solcher aufwändigen Hard- und Software auszustatten. Somit ist ein Veranstalter auch bei nur einem Breitensportturnier mit weitgehend fehlenden Werbeeinnahmen gezwungen, kostenintensive Start- und Zielgeräte anzuschaffen.

Andererseits sind - gerade im Breitensport - oftmals Start- und Zielgeräte vorhanden, die für eine kabelbasierte und latenzfreie Vernetzung und Synchronisierung vorbereitet sind, und die in Anbetracht der Tatsache, dass eine kabellose Synchronisation nicht bei allen Wettkampfveranstaltungen notwendig ist, auch weiterverwendet werden sollen.

Durch die Erfindung kann in einer bestehenden und nicht notwendigerweise zur latenzbehafteten Synchronisation vorbereiteten Endgeräteumgebung eine latenzfreie, zumindest erheblich latenzverringerte Synchronisation bzw. Signalausgabe aufwandsgünstig durchgeführt werden. Je nach Ausführung der Erfindung kann außerdem auf eine Anpassung der bestehenden Endgeräte verzichtet werden, so dass beispielsweise der Veranstalter eines Wettkampfs seine Endgeräte unverändert verwenden kann.

Bei einer Signalübertragung durch eine Einheit hindurch tritt eine Latenz auf, also ein Zeitraum zwischen dem Signalempfang in der Einheit und dem Senden des vom Signalempfang verursachten Sendesignals in der Einheit. Gleiches gilt auch in einem Netzwerk zwischen dem Absenden eines Signals in das Netzwerk und einem Empfangen des vom Absendesignals verursachten empfangenden Signals aus dem Netzwerk. Während jedoch eine Latenz einer einzelnen Einheit in der Regel bekannt ist, so dass diese bei einer Synchronisierung berücksichtigt werden kann, ist eine Netzwerklatenz häufig nicht bekannt.

Um dennoch eine Synchronisierung vornehmen zu können, wird ein Verzögerungszeitwert verwendet, der zweckmäßigerweise größer als eine Latenz einer Einheit oder eines Netzwerks ist, durch das das Synchronisierungssignal gesendet wird. Der Verzögerungszeitwert kann auf einen Systemzeitwert aufaddiert werden, beispielsweise auf einen Sendezeitpunkt eines Signals, so dass der Zeitpunkt des Eintreffens des durch die unbekannte Latenz in der Einheit oder im Netzwerk verzögerten empfangenen Signals vor dem Ergebniszeitpunkt liegt, der aus der Addition der Verzögerungszeit auf die Systemzeit entsteht. Wird nun ein weiterer Synchronisierungsschritt erst nach dem Ergebniszeitpunkt begonnen, so ersetzt die bekannte Verzögerungszeit die unbekannte Latenz, so dass die Synchronisierung auch durch das mit der unbekannten Latenz behaftete Netzwerk vorgenommen werden kann.

Die Erfindung geht von der weiteren Überlegung aus, dass die beiden erfindungsgemäßen Netzwerkgeräte die latenzbehaftete Synchronisierung, also die Synchronisierung über das latenzbehaftete Netzwerk, übernehmen. Die Netzwerkgeräte können vom Veranstalter eines Wettkampfs ausgeliehen, in das Netzwerk zwischengeschaltet und nach dem Wettkampf wieder abgegeben werden. Die Netzwerkgeräte verwenden ihre Synchronisierung, also die gemeinsame Systemzeit, und synchronisieren ein oder mehrere Endgeräte anhand des ausgewählten oder gegebenen Systemzeitwerts und des Verzögerungszeitwerts. Anhand des Verzögerungszeitwerts kann der störende Einfluss einer netzwerkeigenen Latenz bei der Synchronisierung des Endgeräts einfach überwunden werden.

Wie beschrieben, ist die Erfindung besonders vorteilhaft anwendbar im Bereich der Zeitmessung im Sport. Start- und Zielgeräte können über weite Strecken drahtlos oder über eine latenzbehaftete Drahtstrecke miteinander synchronisiert werden. Die Erfindung ist jedoch auch vorteilhaft in den Gebieten der Industrie oder der Forschung anwendbar, z.B. für die Synchronisierung von zwei oder mehreren in einen gemeinsamen Prozess eingebundenen Maschinen, für die Synchronisierung von Produktionsprozessen, von zwei Steuerungsanlagen, Schaltgeräten, Messgeräten und dergleichen.

Gemäß der Erfindung werden eine Uhr des ersten Netzwerkgeräts und eine Uhr eines zweiten Netzwerkgeräts über ein latenzbehaftetes Kommunikationsnetzwerk auf eine gemeinsame Systemzeit synchronisiert. Als ein latenzbehaftetes Kommunikationsnetzwerk kann in diesem Zusammenhang ein Netzwerk verstanden werden, über das eine Kommunikationsdauer zwischen den beiden Netzwerkgeräten, also eine Zeitdauer zwischen dem Senden einer Information von einem der Netzwerkgeräte und dem Empfangen der Information vom anderen der Netzwerkgeräte, mit einer Wahrscheinlichkeit von über 10 % länger als 10 µs, insbesondere länger als 100 µs benötigt.

Eine Synchronisierung kann mit üblichen Verfahren erfolgen. Besonders üblich ist ein Verfahren nach einem Standard nach IEEE 1588. Zweckmäßigerweise sind hierfür alle Glieder einer Kommunikationskette zwischen den beiden Netzwerkgeräten IEEE 1588-konform. IEEE 1588 legt Standards insbesondere für verdrahtete Netzwerke fest. Solche Standards können jedoch auch für Netzwerke verwendet werden, bei denen eine Kommunikation über eine drahtlose Strecke verläuft, im Folgenden vereinfacht als drahtloses Netzwerk bezeichnet. Die Synchronisierung von Geräten entlang der Kommunikationsstrecke kann auch bei drahtlosen Strecken nach dem IEEE 1588-Grundmuster erfolgen, z.B. mittels eines Start of Frame Delimiters (SFD) und einer nachfolgenden Zeitangabe im Datenpaket. Generell sind Zeitstempelverfahren möglich und vorteilhaft. In Abhängigkeit von der gewünschten Genauigkeit kann eine zusätzliche Hardwareunterstützung sinnvoll sein.

Eine Synchronisierung, die ungenauer als nach IEEE 1588-Standard ist, ist jedoch auch möglich. Ein Beispiel ist eine Synchronisierung über NTP. Datenpakete werden zwischen den beiden Netzwerkgeräten hin und her geschickt und die Dauer eines Hin- und Rückwegs ermittelt. Bei symmetrischer Kommunikation kann die Dauer halbiert werden zur Bestimmung einer Laufzeitdauer zwischen den Netzwerkgeräten. Eine solche Laufzeitbestimmung kann wiederholt erfolgen, um Laufzeitschwankungen zu erkennen und zu berücksichtigen. Wiederholungen können regelmäßig in vorbestimmten Abständen und/oder in Abhängigkeit von Laufzeitveränderungen erfolgen.

Das Kommunikationsnetzwerk kann ein drahtloses Netzwerk sein und z.B. funk-, WLAN-, satellit-, internetbasiert oder dergleichen sein. Das Kommunikationsnetzwerk kann auch ein drahtgebundenes Netzwerk sein, bei dem die Kommunikation zwischen den Netzwerkgeräten vollständig drahtgebunden verläuft. Zweckmäßigerweise umfasst das Kommunikationsnetzwerk zumindest die beiden Netzwerkgeräte und zumindest einen weiteren Kommunikations- bzw. Netzwerkteilnehmer.

Generell ist die Erfindung auch auf ein Verfahren zum Synchronisieren von zwei und insbesondere mehr als zwei mit einem Netzwerk verbundenen Endgeräten gerichtet. Die Synchronisierung erfolgt durch die zeitgenaue Ausgabe eines Signals an eines der Endgeräte, jeweils an mehrere oder alle der Endgeräte, wobei zuvor eine Systemzeituhr eines ersten Netzwerkgeräts und eine Systemzeituhr eines zweiten Netzwerkgeräts über ein latenzbehaftetes Kommunikationsnetzwerk auf eine gemeinsame Systemzeit synchronisiert werden. Vorteilhafte Ausführungsformen dieser Darlegung der Erfindung sind in den Unteransprüchen, dem kennzeichnenden Teil des Anspruchs 1 und/oder anderen Merkmalen der Beschreibung dargelegt.

Ein Endgerät kann allgemein ein Kommunikations- bzw. Netzwerkteilnehmer sein, im Folgenden kurz: Netzwerkteilnehmer, der insbesondere zumindest überwiegend Information verarbeitet, die für ihn selbst bestimmt ist, also an ihn adressiert ist, und dies nicht zum Zweck der Weiterleitung an einen anderen Netzwerkteilnehmer. Ein Endgerät kann auch ein Netzwerkteilnehmer sein, der von zumindest einem der beiden Netzwerkgeräte das zeitgenaue Signal zur eigenen Verarbeitung empfängt, also nicht zum Zweck der Weiterleitung an einen anderen Netzwerkteilnehmer.

Das Endgerät kann ein Startgerät zur Erfassung einer Startzeit eines Wettkampfteilnehmenden bei einer Sportwettkampfveranstaltung, ein Zielgerät zur Erfassung einer entsprechenden Zielzeit, eine Kamera, ein Aktuator, ein Sensor, beispielsweise eine Lichtschranke, oder dergleichen sein.

Die Systemzeituhr eines Netzwerkgeräts ist zweckmäßigerweise eine Zeitmesseinrichtung mit einem Quarz, ein softwarebasierter Dienst oder dergleichen. Die Synchronisation der Systemzeituhren auf die gemeinsame Systemzeit erfolgt zweckmäßigerweise mit einem bekannten Verfahren, bevorzugt mit einem Verfahren nach der IEEE-Standardisierung 1588.

Der Systemzeitwert kann ein Zeitstempel sein, der beispielsweise durch eine Betätigung eines Schalters, z.B. am Netzwerkgerät erzeugt wird. Vorteilhafterweise kann der Zeitstempel durch ein Signal eines mit dem Endgerät verbundenen Zeitwertgebers, z.B. eines Tasters, einer Lichtschranke, die beispielsweise eine Ziellinie einer Wettkampfstrecke überwacht, oder durch ein Signal eines anderen Sensors getriggert werden.

Der Verzögerungszeitwert kann ein vorgegebener Wert und/oder ein in Abhängigkeit einer Netzwerkeigenschaft, z.B. einer Latenzzeit des Kommunikationsnetzwerks, stehender Wert sein, der beispielsweise von einem Netzwerkgerät ermittelt wird. Zweckmäßigerweise ist der Verzögerungszeitwert größer als eine Latenz des Kommunikationsnetzwerks, also größer als eine insbesondere maximale Zeitdauer, die ein Versand eines Signals von einem Netzwerkgerät zum anderen und weiter zu einem Endgerät benötigt.

Das Signal wird unter Verwendung des Systemzeitwerts und des Verzögerungszeitwerts durch zumindest eines der Netzwerkgeräte zeitgenau an zumindest ein Endgerät ausgegeben. Hierzu gibt es mehrere Möglichkeiten. In einer ersten Möglichkeit wird das Signal erst zu einem Ergebniszeitpunkt, der eine Addition des Verzögerungswerts auf den Systemzeitwert ist, an das Endgerät ausgegeben. Das Signal wird also zweckmäßigerweise zum Systemzeitwert plus dem Verzögerungszeitwert ausgegeben und kann beispielsweise einen Aktuator ansteuern. Die Ausgabe des Signals erfolgt zeitgenau. Unter zeitgenau im Sinne der Erfindung kann verstanden werden, dass die Ausgabe des Signals zu einem festgelegten bzw. bekannten Zeitpunkt erfolgt, insbesondere zu einem relativ zur Systemzeit, beispielsweise zum Systemzeitwert, bekannten Zeitpunkt. Es kann so eine a priori unbekannte Verzögerung der Signalausgabe durch einen Einfluss der Latenzzeit vermieden wird.

Für eine zeitgenaue Ausgabe ist im Sportbereich eine Ausgabe mit einer Genauigkeit besser als ± 100 µs, insbesondere besser als ± 10 µs, in Bezug zur synchronisierten Systemzeit ausreichend. Im industriellen Bereich kann eine zeitgenaue Ausgabe eine Genauigkeit besser als ± 1 µs, insbesondere besser als ± 100 ns, erfordern.

Eine weitere Möglichkeit besteht darin, dass das Signal den Verzögerungszeitwert als Information beinhaltet, beispielsweise in Form einer Codierung im Signal enthalten ist. Dies kann auch bei der obigen Möglichkeit der Fall sein. Mit dieser Information ist es möglich, dass das Signal bereits früher als zum Ergebniszeitpunkt an ein Endgerät ausgegeben wird, insbesondere zu einem nicht relativ zur Systemzeit bzw. zum Systemzeitwert bekannten Zeitpunkt. Weist das Endgerät eine mit der Systemzeit synchronisierte Uhr auf, so kann das Endgerät anhand der Information über den Verzögerungszeitwert mit der Weiterverwendung des Signals bis zum Ergebniszeitpunkt warten, so dass die Weiterverwendung zum bekannten Zeitpunkt beginnt. Auch diese Ausgabe des Signals an das Endgerät wird als zeitgenau bezeichnet, da das Signal die zeitgenaue Information, beispielsweise Systemzeitwert plus Verzögerungszeitwert und/oder den Ergebniszeitwert enthält und somit eine zeitgenaue Weiterverarbeitung anhand der zeitgenauen Ausgabe möglich ist. Oder in einer anderen Darstellung: Das empfangende Endgerät ist derjenige Teil eines Geräts, der auf der Grundlage des empfangenen Signals zeitgenau eine Aktion beginnt. Ist beispielsweise das Gerät eine Zeitanzeigetafel, so kann das Endgerät ein Anzeigemodul der Zeitanzeigetafel sein, das mit dem Ergebniswert eine Aktion steuert, z.B. den Beginn einer Zeitanzeige.

In einer dritten Möglichkeit ist der Verzögerungszeitwert in einem Gerät hinterlegt, das das zeitgenau ausgegebene Signal empfängt, beispielsweise eine Zeitanzeigetafel. Das Signal trägt als Information den Systemzeitwert, auf die Übermittlung der Verzögerungszeit an das Gerät kann verzichtet werden. Das Gerät empfängt den Systemzeitwert und addiert den Verzögerungszeitweit hinzu, um bei dem erhaltenen Ergebniszeitwert eine Aktion mittels eines Steuerungsignals durchzuführen, z.B. einen Aktuator anzusteuern oder eine Zeit anzuzeigen, das zeitgenau zum Endgerät, wie dem Aktuator oder einem Anzeigemodul, gesendet wird.

Bei beiden Möglichkeiten kann der Verzögerungszeitwert von dem einen oder anderen der synchronisierten Netzwerkgeräte festgelegt und/oder ausgegeben werden. Der Verzögerungszeitwert kann in einem der Netzwerkgeräte fest hinterlegt oder in Abhängigkeit von Signallaufzeiten im Netzwerk von einem der Netzwerkgeräte bestimmt werden.

Durch das ausgegebene Signal kann eine Auslösung und/oder Aktivierung eines Dienstes bzw. einer Funktion, insbesondere einer Endgerätefunktion, mit einer exakt eingestellten Verzögerung unter sogenannten Echtzeitbedingungen unter Umgehung einer Beeinflussung durch eine Netzwerklatenzzeit erreicht werden. Beispielsweise kann der Dienst ein zeitbasiertes Schalten eines I/O, eine Zeitnahme eines Eingangssignals, ein zeitbasiertes Vorhalten eines Datenpakets mit einer entsprechenden Weiterleitung an einen Kommunikationskanal oder dergleichen sein.

Ein einfaches Netzwerk kann in einer bevorzugten Ausführungsform der Erfindung wie folgt erstellt werden. Zwei Geräte, die für eine kabelgebundene Synchronisierung vorbereitet sind, werden als Endgeräte verwendet, z.B. ein Start- und ein Zielgerät oder zwei Steuereinheiten von Industriegeräten. Anstelle der Kabelverbindung zwischen den Endgeräten werden die zwei Netzwerkgeräte zwischen die Endgeräte geschaltet, wobei jedes der Netzwerkgeräte über Kabel mit einem der Endgeräte verbunden ist und die Netzwerkgeräte über das latenzbehaftete Netzwerk verbunden sind oder das Netzwerk bilden.

In einer vorteilhaften Ausführungsform der Erfindung wird durch das ausgegebene Signal ein mit dem zweiten Netzwerkgerät latenzfrei verbundenes Endgerät mit einem mit dem ersten Netzwerkgerät latenzfrei verbundenen Endgerät synchronisiert. Latenzfrei kann im Zusammenhang mit der Erfindung eine Datenübertragung zwischen den Geräten schneller als 1 µs, insbesondere schneller als 10 ns sein. Die Synchronisation kann die Synchronisation von Uhren der Endgeräte sein und/oder die zeitlich synchronisierte Abfolge einer Aktion eines Endgeräts relativ zu einer Aktion des anderen Endgeräts. Beispielsweise wird ein Steuersignal von einem Endgerät ausgegeben und eine vorbestimmte Zeitspanne danach, z.B. 200 ms, erfolgt eine Aktion des zweiten Endgeräts, z.B. das Steuern eines Produktionsprozesses. Die Synchronisierung erfolgt durch das Einhalten der vorbestimmten Zeitspanne zwischen einer Aktion eines Endgeräts zu einer Aktion des anderen Endgeräts mit einer vorbestimmten Mindestgenauigkeit. Insofern können die Endgeräte zur Synchronisierung eine Uhr haben, müssen es aber nicht.

Vorteilhafterweise wird eine Endgerätezeituhr eines Endgeräts mit einer Zeituhr eines weiteren Netzteilnehmers synchronisiert. Der weitere Netzteilnehmer kann eines der beiden Netzwerkgeräte sein. Der weitere Netzteilnehmer kann aber auch ein anderes Endgerät sein, so dass beide Endgeräte auf eine mit einer Endgerätezeituhr eines weiteren der Endgeräte gemeinsame Endgerätezeit synchronisiert werden.

Die Endgerätezeituhr kann eine Zeitmesseinrichtung sein, die durch ein Signal, beispielsweise durch ein Lichtschrankensignal oder ein Schaltersignal, insbesondere analog zu einer Stoppuhr, auslösbar ist. Die Endgerätezeituhr kann einen Quarz aufweisen. Das Auslösen kann ein Starten und/oder Stoppen der Zeitmessung bewirken. Zweckmäßigerweise dient eine der Endgerätezeituhren als Synchronisationsreferenz.

Eine einfache Anbindung eines Endgeräts an das Netzwerk kann erreicht werden, wenn eines der Netzwerkgeräte einem Netzwerkkanal eines der Endgeräte vorgeschaltet ist, wobei das Endgerät durch das Netzwerkgerät zumindest mittelbar an das Kommunikationsnetzwerk angebunden wird. Der Netzwerkkanal kann ein Kanal zur funk-, LAN-, WLAN-, BUS- oder internetbasierten Kommunikation oder dergleichen sein. Das Netzwerkgerät kann dem Netzwerkkanal des Endgeräts zweckmäßigerweise mit einem Kabel, das beispielsweise eine Datenübertragungsleitung gemäß einem verwendeten Kommunikationsprotokoll und eine Signalübertragungsleitung gemäß den technischen Anforderungen der Zeitsynchronisation umfasst, vorgeschaltet werden.

Besonders vorteilhaft ist es, wenn die Endgeräte, beispielsweise ein Start- und ein Zielgerät, trotz Synchronisierung über das latenzbehaftete Netzwerk nicht modifiziert werden müssen. Dies kann erreicht werden, wenn die Kommunikation zwischen den Endgeräten trotz zwischengeschalteter Netzwerkgeräte nicht verändert werden muss. Hierfür ist es vorteilhaft, wenn das Netzwerkgerät für das Endgerät kommunikationstransparent ist. Insofern erfolgt die Vorschaltung des Netzwerkgeräts vor das Endgerät vorzugsweise kommunikationstransparent. Unter kommunikationstransparent im Sinne der Erfindung kann verstanden werden, dass das Netzwerkgerät unter einer Umgehung einer Anpassung einer Kommunikationskonfiguration des Endgeräts in das Kommunikationsnetzwerk eingebracht und dem Endgerät vorgeschaltet wird. Das Netzwerkgerät kann für die anderen Netzwerkteilnehmer, insbesondere für die Endgeräte, im Sinne eines Netzwerkverkehrs als zumindest überwiegend unsichtbar in das Kommunikationsnetzwerk eingebracht werden. Auf diese Weise kann erreicht werden, dass die Netzwerkgeräte mit geringem Aufwand in eine bestehende Endgeräteumgebung und in ein gegebenenfalls bestehendes Kommunikationsnetzwerk eingebracht und das Verfahren dementsprechend aufwandsgünstig durchgeführt werden kann.

Vorteilhafterweise kommuniziert eines der Netzwerkgeräte unter Verwendung einer Netzwerkadresse eines der Endgeräte als eigene Netzwerkadresse über das Kommunikationsnetzwerk. Daten von und zum Endgerät können durch das Netzwerkgerät geleitet werden, ohne dass dieser Vorgang im Netzwerk erscheint. Das Netzwerkgerät kann als logisch integrierte Komponente des Endgeräts betrieben werden, wobei das Netzwerkgerät zumindest einen Anteil einer für das Verfahren notwendigen Kommunikation unter Verwendung der Netzwerkkonfiguration des Endgeräts durchführt.

Der Transparenz steht es nicht im Wege, wenn das Netzwerkgerät auch als eigenständiger Netzwerkteilnehmer mit eigener Netzwerkadresse und einer entsprechenden Konfiguration betrieben wird und eigenständig adressiert werden kann.

In einer vorteilhaften Ausgestaltung ist der Systemzeitwert ein Zeitstempel eines vom Netzwerkgerät registrierten Auslösesignals, insbesondere eines durch einen Auslöseschalter erzeugten Signals. Hierdurch kann eine Synchronisierung in einfacher Weise manuell ausgelöst werden.

Der Systemzeitwert kann ein Zeitstempel sein, der beispielsweise durch eine Betätigung eines Schalters am Netzwerkgerät und/oder am mit diesem verbundenen Endgerät erzeugt wird. Der Systemzeitwert kann durch ein Signal zur Zeitsynchronisation zwischen den Netzwerkgeräten und dem unmittelbar verbundenen Endgerät erzeugt werden.

Um eine leichte temporäre Integration der Netzwerkgeräte in eine fremde Netzwerkumgebung zu ermöglichen, ist es vorteilhaft, wenn die Netzwerkgeräte Netzwerkkommunikation empfangen und erlauschte Netzwerkadressen von Netzwerkteilnehmern in einer Liste erfassen. Im Speziellen ist es vorteilhaft, wenn ein Datensignal von einem Endgerät an ein weiteres der Endgeräte versendet wird, wobei die Netzwerkadressen der Endgeräte von zumindest einem der Netzwerkgeräte gelistet werden.

Das Datensignal kann ein Signal sein, das das eine Endgerät zur Kommunikation mit dem weiteren Endgerät versendet, beispielsweise zur Initiierung einer Kommunikation zwischen den Endgeräten. Das Datensignal kann als Aktivierungssignal von einem als Sensor ausgebildeten Endgerät zu einem als Aktuator ausgebildeten Endgerät versendet werden, um eine Funktion des Aktuators auszulösen. Das Datensignal wird zweckmäßigerweise mit einer Sender- und einer Empfängernetzwerkadresse versehen.

Insbesondere bei einer Vorschaltung des Netzwerkgeräts am Netzwerkkanal des Endgeräts kann das Datensignal auf einfache Weise registriert und die Netzwerkadressen gelistet werden. Zweckmäßigerweise werden die Netzwerkadressen dauerhaft, beispielsweise über den zeitlichen Verlauf des Verfahrens hinweg, gelistet bzw. in einem Speicher des Netzwerkgeräts vorgehalten.

Es ist vorteilhaft, wenn die von zumindest einem der Netzwerkgeräte erfassten Netzwerkadressen in einer Datenstruktur des Netzwerkgeräts, insbesondere des durchreichenden Netzwerkgeräts, gespeichert werden. Die Datenstruktur kann ein Datensatz, ein Array, ein Graph oder dergleichen sein. In der Datenstruktur können die gelisteten Netzwerkadressen vorzugsweise mit einem Attribut, wie beispielsweise ein Adressatenattribut und/oder ein Adressantenattribut, versehen werden und auslesbar gespeichert werden. Vorzugsweise ist der Inhalt der Datenstruktur während des zeitlichen Verlaufs des Verfahrens veränderbar, also insbesondere schreib-, lösch- und/oder erweiterbar. Die derart in der Datenstruktur gespeicherte Information kann zu einem Kommunikationsaufbau der Netzwerkgeräte verwendet werden.

Zum Aufbau einer Netzwerkkommunikation ist es vorteilhaft, wenn sich die beiden Netzwerkgeräte zunächst miteinander verständigen. Da sie ggf. zunächst nichts von sich wissen, kann eines der Netzwerkgeräte ein Suchsignal in das Netzwerk senden, auf das das andere Netzwerkgerät reagiert. Der Trigger für ein solches Suchen kann von einem der Endgeräte kommen, das eine Kommunikation beginnt. Insbesondere kann ein Datensignal von einem Endgerät an ein weiteres der Endgeräte versendet und von einem der Netzwerkgeräte registriert werden, wodurch ein Versenden eines Suchsignals zum Auffinden zumindest eines weiteren Netzwerkgeräts im Netzwerk getriggert wird.

Das Suchsignal kann ein unadressiertes, also nicht an einen spezifischen Netzwerkteilnehmer gerichtetes, Signal sein. Das Suchsignal kann mit einem Attribut versehen sein, das eine Adressierung einer spezifischen Gruppe von Netzwerkteilnehmern ermöglicht. Vorzugsweise ermöglicht das Attribut des Signals bzw. eine Eigenschaft des Signals ein Adressieren beliebiger weiterer innerhalb des Kommunikationsnetzwerks vermuteter Netzwerkgeräte. Vorteilhafterweise versendet das Netzwerkgerät das Suchsignal automatisch nach einem Triggern durch ein Signal des Endgeräts, sodass geeignete Kommunikationspartner des sendenden Netzwerkgerätes selbsttätig aufgefunden werden können. Auf diese Weise kann der Aufwand zur Durchführung des Verfahrens durch Vermeidung eines Nutzereingriffs reduziert werden. Insbesondere gilt dies, wenn eine Vielzahl von Netzwerkgeräten innerhalb des Kommunikationsnetzwerkes bzw. zur Durchführung des Verfahrens verwendet wird.

Außerdem ist es vorteilhaft, wenn das Suchsignal von einem weiteren der Netzwerkgeräte empfangen, erwidert und eine Kommunikation über das Kommunikationsnetzwerk zwischen den Netzwerkgeräten etabliert wird.

Zweckmäßigerweise versenden und erwidern die Netzwerkgeräte das Suchsignal automatisch derart, dass die Netzwerkgeräte selbsttätig geeignete Kommunikationspartner in dem Kommunikationsnetz auffinden und kontaktieren. Vorteilhafterweise geben sich die Netzwerkgeräte durch das Erwidern des Suchsignals zu jeweils einem der Endgeräte gehörig zu erkennen.

Alternativ dargestellt, identifiziert das Netzwerkgerät mittels des Netzwerkverkehrs durch sogenannte Broadcasts einen möglichen Kommunikationspartner, insbesondere einen möglichen Synchronisationspartner.

Die Kommunikation zwischen den Netzwerkgeräten kann insbesondere zum Zweck der zeitlichen Synchronisation der Systemzeituhren der Netzwerkgeräte auf die Systemzeit etabliert werden. Auf diese Weise kann mittels der Netzwerkgeräte eine sich dynamisch, insbesondere autonom, bildende Synchronisationsinfrastruktur eingerichtet werden. Bevorzugt verfügt die so gebildete Synchronisationsinfrastruktur über sogenannte Selbstheilungseigenschaften.

In einer weiteren Ausführungsform stellt eines der Netzwerkgeräte die synchronisierte Systemzeit zumindest temporär einem Endgerät als Referenzzeit zur Verfügung. Die Systemzeit kann vom Endgerät als Standardzeitdienst zur insbesondere zeitgenauen Vornahme von Endgerätefunktionen, beispielsweise zu einer Datenausgabe, einer Datenerfassung, einer Betätigung eines Aktuators oder dergleichen, genutzt werden. Ferner kann somit vom Endgerät ein Eingabedienst und/oder ein Ausgabedienst unter Berücksichtigung einer, zweckmäßigerweise hochgenauen, Systemzeit zur Verfügung gestellt werden.

Um eine Hierarchie an sich gleicher Netzwerkgeräte festzulegen, ist es vorteilhaft, wenn in Abhängigkeit zumindest einer Eigenschaft der Systemzeituhren der Netzwerkgeräte eine Systemzeituhr eines Netzwerkgeräts als Vorgabesystemzeituhr zur Vorgabe der gemeinsamen Systemzeit ermittelt wird. Die zumindest eine Eigenschaft kann eine Präzision der Quarze der Systemzeituhren sein. Die Vorgabesystemzeituhr im Sinne der Erfindung kann diejenige Systemzeituhr sein, deren Zeit in vorzugsweise regelmäßigen Zeitabständen als Referenzwert für eine Zeitsynchronisierung weiterer Systemzeituhren weiterer Netzwerkgeräte verwendet wird. Zweckmäßigerweise wird die präziseste Systemzeituhr bzw. die Systemzeituhr, welche den präzisesten Quarz aufweist, als Vorgabesystemzeituhr ausgewählt. Die Vorgabesystemzeituhr kann sich im zeitlichen Verlauf des Verfahrens ändern, beispielsweise, wenn eine der Systemzeituhren ausfällt oder eine Beeinträchtigung ihrer Präzision auftritt. Auch andere Kriterien zur Priorisierung einer Systemzeituhr zur Vorgabesystemzeituhr sind möglich. So kann z.B. die Systemzeituhr des Netzwerkgeräts mit der niedrigsten Netzwerkadresse gewählt werden. Auch das Wechseln der Systemzeituhren als Vorgabesystemzeituhr ist möglich, z.B. wenn die zunächst gewählte Systemzeituhr einen geforderten Genauigkeitsgrenzwert überschreitet, also nicht einhält.

Zudem ist die Erfindung gerichtet auf ein System aus zwei Netzwerkgeräten mit jeweils einem Netzwerkeingangskanal, eingerichtet zur Anbindung an ein Kommunikationsnetzwerk, einem Netzwerkausgangskanal, eingerichtet zur Anbindung an einen Netzwerkkanal eines Endgeräts, einer Systemzeituhr und einer Prozessoreinheit, die zu einer Synchronisierung der Systemzeituhr mit einer Systemzeituhr eines weiteren Netzwerkgeräts über ein latenzbehaftetes Kommunikationsnetzwerk eingerichtet ist. Die Prozessoreinheit ist dazu eingerichtet, die Ausgabe eines Signals unter Verwendung der gemeinsamen Systemzeit, eines Systemzeitwerts und eines Verzögerungszeitwerts über den Netzwerkausgangskanal zu steuern. Erfindungsgemäß sind die Systemzeituhren der Netzwerkgeräte auf eine gemeinsame Systemzeit synchronisierbar und die Prozessoreinheiten sind jeweils zur Durchführung des erfindungsgemäßen Verfahrens eingerichtet.

Die Netzwerkgeräte können zu einer Kommunikation über ein Kommunikationsnetzwerk vorbereitet sein. Die Systemzeituhren können insbesondere zu einer Synchronisierung mit einer weiteren Systemzeituhr nach einem Verfahren nach IEEE 1588 vorbereitet sein.

In einer vorteilhaften Ausgestaltung weisen die Netzwerkgeräte eine Mehrzahl von verschiedenartigen Kommunikationsschnittstellen auf, jeweils vorbereitet zu einer Anbindung an verschiedenartige Endgeräte.

Die Kommunikationsschnittstellen können Schnittstellen, insbesondere I/O-Schnittstellen zur Kommunikation via Internet, Funk, WLAN, LAN, BUS, Datenkabel oder dergleichen sein. Zweckmäßigerweise umfassen die Netzwerkgeräte eine Mehrzahl von Kommunikationsschnittstellen, die eine Anbindung an gängige Endgeräte ermöglichen, insbesondere an Sensoren, an Aktuatoren und bevorzugt an verschiedenartige Zeiterfassungssysteme für Sportwettkampfveranstaltungen. Auf diese Weise kann eine aufwandsgünstige und anpassbare Integration der Netzwerkgeräte in eine Endgeräteumgebung erreicht werden.

Insbesondere ist jeweils ein Netzwerkgerät mit jeweils einem Endgerät paarweise und örtlich getrennt von einer weiteren derartig paarweisen Anordnung angeordnet. Eine Strecke zwischen den Endgeräten kann mehr als 50 m, insbesondere mehr als 250 m, betragen.

In einer vorteilhaften Ausführungsform sind die Endgeräte Zeiterfassungsgeräte zur Erfassung von Start- und/oder Zwischen- und/oder Zielzeiten bei einer Sportwettkampfveranstaltung, insbesondere bei einem Skirennen, oder Steuergeräte zur Steuerung von Industrieprozessen und/oder Infrastrukturprozessen. Beispielsweise kann eines der Zeiterfassungsgeräte ein Startgerät sein, welches am Start einer Wettkampfstrecke postiert ist. Dementsprechend können weitere Zeiterfassungsgeräte an Zwischenzielen und am Ziel der Wettkampfstrecke postiert sein.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammenfasst werden. Insbesondere sind diese Merkmale jeweils einzeln und in beliebiger geeigneter Kombination sowohl mit dem erfindungsgemäßen Verfahren als auch mit der erfindungsgemäßen Vorrichtung gemäß den unabhängigen Ansprüchen kombinierbar. So sind Verfahrensmerkmale auch als Eigenschaft der entsprechenden Vorrichtungseinheit gegenständlich formuliert zu sehen und umgekehrt.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: ein System aus zwei über ein Kommunikationsnetzwerk verbundenen Netzwerkgeräten und einem Sensor und einem Aktuator,
- FIG 2: ein weiteres System mit den Netzwerkgeräten aus FIG 1 und zwei anderen Endgeräten und
- FIG 3: ein weiteres System mit einem als logische Komponente eines Endgeräts betriebenen Netzwerkgerät.

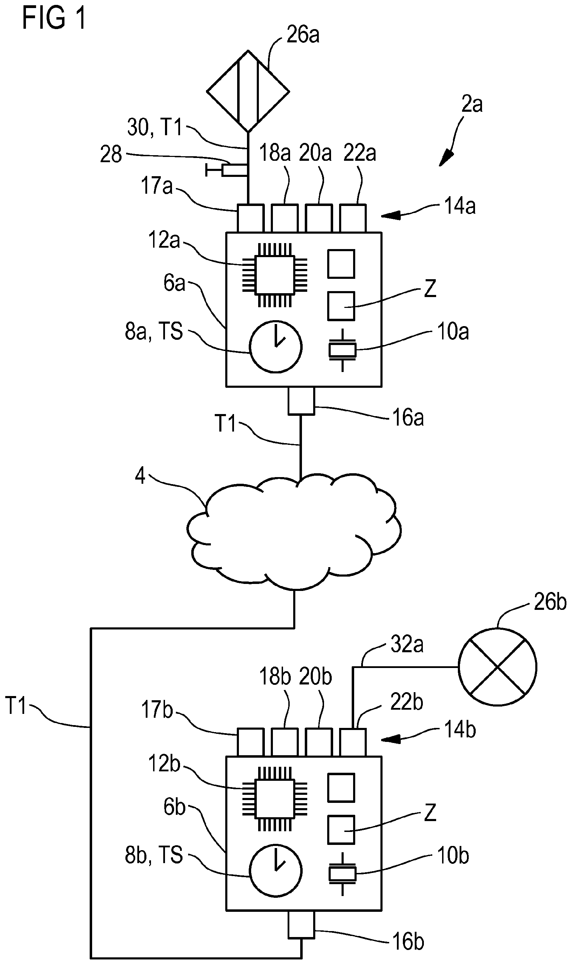

FIG 1 zeigt ein System 2a aus zwei über ein Kommunikationsnetzwerk 4 verbundenen Netzwerkgeräten 6a, 6b. Gleiche Bauteile, die jedoch unter Umständen geringfügige Unterschiede aufweisen können, z.B. in Abmessung, Position und/oder Funktion, sind mit der gleichen Bezugsziffer und anderen Bezugsbuchstaben gekennzeichnet. Wird die Bezugsziffer alleine ohne einen Bezugsbuchstaben erwähnt, so sind die entsprechenden Bauteile aller Ausführungsbeispiele angesprochen.

Die Netzwerkgeräte 6a, 6b weisen jeweils eine Systemzeituhr 8a, 8b mit einem Quarz 10a, 10b, eine Prozessoreinheit 12a, 12b, eine Mehrzahl von verschiedenenartigen Kommunikationsschnittstellen 14a, 14b und einen Netzwerkausgangskanal 16a, 16b auf. Die Kommunikationsschnittstellen 14a, 14b und der Netzwerkausgangskanal 16a, 16b sind jeweils eine I/O-Schnittstelle.

Die Netzwerkgeräte 6a, 6b sind über ihren jeweiligen Netzwerkausgangskanal 16a bzw. 16b an das Kommunikationsnetzwerk 4 angebunden. Das Kommunikationsnetzwerk 4 ist ein Netzwerk mit einem Internet-Kommunikationsstandard, einem GSM-Kommunikationsstandard, einem Standard nach IEEE 802.11, 802.15, insbesondere 802.15.4, und ist mit einer a priori unbekannten, zeitlich veränderlichen Latenzzeit zur Datenübertragung behaftet.

Die Kommunikationsschnittstellen 14 der Netzwerkgeräte 6 sind im vorliegenden Ausführungsbeispiel als BUS-Schnittstelle 17, USB-Schnittstelle 18, WLAN-Schnittstelle 20 und als LAN-Schnittstelle 22 ausgeführt.

Die BUS-Schnittstelle 17a des Netzwerkgeräts 6a ist mit einem Endgerät 26a mit einem Sensor verbunden. Die LAN-Schnittstelle 22b des Netzwerkgeräts 6b ist mit einem Endgerät 26b mit einem Aktuator verbunden. In einem ersten Ausführungsbeispiel ist der Sensor im Endgerät 26a eine Lichtschranke und der Aktuator im Endgerät 26b eine Zeitanzeigetafel zur zeitgenauen Anzeige einer seit einer Auslösung der Lichtschranke verstrichenen Zeit.

Werden die beiden Endgeräte 26a, 26b über Kabel miteinander verbunden, stellt die Zeitanzeige auf der Zeitanzeigetafel kein Problem dar. Hierfür enthält das Endgerät 26b eine Uhr, die auf Signal des Sensors aus dem Endgerät 26a bei 0:00:00,0 oder einer anderen vom Endgerät 26a vorgegebenen Zeit startet und hoch läuft.

Durch das latenzbehaftete Netzwerk 4 benötigt das Signal jedoch für die Laufzeit vom Endgerät 26a zum Endgerät 26b eine nicht vorbekannte Zeitdauer, so dass die Anzeige auf der Zeitanzeigetafel ungenau ist.

Um dies zu vermeiden, wird die Kabelverbindung zwischen den beiden Endgeräten 26a, 26b aufgetrennt und die beiden Netzwerkgeräte 6a und 6b werden zwischengeschaltet. Durch sie kann die Latenz umgangen und die Zeit exakt auf der Zeitanzeigetafel angezeigt werden.

Hierfür werden im Vorfeld die Systemzeituhren 8 der Netzwerkgeräte 6a und 6b auf eine gemeinsame Systemzeit TS synchronisiert. Dies kann dadurch geschehen, dass die beiden Netzwerkgeräte 6a und 6b über Kabel miteinander verbunden werden und sich über Kabel synchronisieren. Anschließend können die beiden Netzwerkgeräte 6a und 6b in die Nähe ihres jeweiligen Endgeräts 26a, 26b gebracht werden. Es ist auch möglich, die Synchronisation drahtlos durchzuführen, beispielsweise über eine direkte und ausreichend latenzfreie Funkverbindung oder über das latenzbehaftete Kommunikationsnetzwerk 4, insbesondere mittels eines aus der IEEE 1588 bekannten Verfahrens.

Nach der Synchronisierung sendet das Endgerät 26a sein Auslösesignal 30 zum Netzwerkgerät 6a, das dort zu einem Systemzeitwert T1 eintrifft, beispielsweise 12:05:07,300. Der Systemzeitwert T1 wird als Datenpaket vom ersten Netzwerkgerät 6a über das Kommunikationsnetzwerk 4 zum zweiten Netzwerkgerät 6b geleitet. Die Übertragung des Systemzeitwerts TS über das Kommunikationsnetzwerk 4 ist mit einer zeitlich veränderlichen Latenzzeit behaftet und gelangt beispielsweise zur Systemzeit 12:05:07,450 am Netzwerkgerät 26b ein.

Das Netzwerkgerät 6b gibt nun ein Signal 32a unter Verwendung der gemeinsamen Systemzeit TS, des vom ersten Netzwerkgerät 6a übermittelten Systemzeitwerts T1 und eines Verzögerungszeitwerts Z an das Endgerät 26b aus. Konkret gibt das Netzwerkgerät 6b das Signal 32a zum Zeitpunkt T1 + Z aus. Der Verzögerungszeitwert Z ist ein bekannter, im vorliegenden Ausführungsbeispiel in einem Speicher der Netzwerkgeräte 6a und 6b hinterlegter Wert, der größer ist als die Latenzzeit des Kommunikationsnetzwerks 4. Er sei beispielsweise 200 ms. Das Signal 32a wird also zum Zeitpunkt 12:05:07,5 ausgegeben.

Das Signal 32a an das Endgerät 26b kann die Verzögerungszeit Z beinhalten, entweder explizit als Angabe und/oder implizit durch seinen Sendezeitpunkt an das Endgerät 26b. Beispielsweise gibt das Netzwerkgerät 6b dem Endgerät 26b die Zeit vor, von dem an die Anzeige hoch laufen soll. In diesem Fall wird die Verzögerungszeit Z angegeben, also 0:00:00,2. Getriggert vom Signal 32a läuft die Anzeige auf der Anzeigetafel nun 200 ms nach Aussenden des Auslösesignals 30 hoch, beginnt dabei aber bei der Verzögerungszeit 0:00:00,2. Oder die Verzögerungszeit ist im Endgerät 26b hinterlegt, und das Endgerät 26b läuft getriggert vom Signal 32a beginnend mit der Verzögerungszeit hoch.

Die Verzögerungszeit Z kann in mindestens einem der Geräte 6a, 6b, 26b fest vorgegeben sein und an ein Gerät 6b, 26b, das die Verzögerungszeit Z nicht hinterlegt enthält, weitergeben. Die Verzögerungszeit Z kann aber auch von einem Netzwerkgerät 6a, 6b festgelegt werden, z.B. in Abhängigkeit von einem Latenzzustand des Netzwerks 4. Stellt ein Netzwerkgerät 6a, 6b fest, dass die Latenz über einen vorgegeben Wert steigt, kann es die Verzögerungszeit Z heraufsetzen, und umgekehrt.

Das Aussenden des Signals 32a erfolgt also zeitgenau, z.B. indem das Signal 32a genau zu dem Zeitwert ausgegeben wird, der als Information im Signal 32a beinhaltet ist.

Es liefert also das beschriebene Verfahren zur Ausgabe des Signals 32a durch die Verwendung der synchronen Systemzeit TS, des Systemzeitwerts T1 und des vorgegebenen Verzögerungszeitwerts Z ein zeitgenaues Anzeigeergebnis. Vereinfacht ausgedrückt werden zunächst die Systemzeituhren 8 auf eine Systemzeit TS, hier beispielsweise 12:00:00,0 h, synchronisiert. Zum Zeitpunkt 12:05:07,3 h wird die Lichtschranke ausgelöst und der Systemzeitwert T1 = 12:05:07,3 erzeugt. Der Systemzeitwert T1 wird zum zweiten Netzwerkgerät 6b geleitet und trifft dort latenzbedingt zur Systemzeit 12:05:07,45 h ein. Bei einem vorgegebenen bzw. voreingestellten Verzögerungszeitwert Z von 0,2 s wird das Signal 32a zur Systemzeit 12:05:07,5 h um den Verzögerungszeitwert Z korrigiert an das Endgerät 26b ausgegeben, das den Verzögerungszeitwert Z bei Eintreffen des Signals 32a auf der Anzeigetafel zur Anzeige bringt, was der seit der Auslösung der Lichtschranke verstrichenen Zeit entspricht.

In einem weiteren Ausführungsbeispiel sind die beiden Endgeräte 26a, 26b ein Startgerät (26a) und ein Zielgerät (26b). Die nachfolgenden Beschreibungen beschränken sich im Wesentlichen auf die Unterschiede zu den jeweils vorhergehenden Ausführungsbeispielen, auf die bezüglich gleich bleibender Merkmale und Funktionen verwiesen wird. Nicht erwähnte Merkmale sind in den folgenden Ausführungsbeispielen übernommen, ohne dass sie erneut beschrieben sind.

Die Endgeräte 26a, 26b sind dazu vorbereitet, über Kabel miteinander verbunden und mithilfe einer Eingabeeinheit 28 miteinander synchronisiert zu werden. Bei direkter Kabelverbindung zwischen den Endgeräten 26a, 26b sendet die Eingabeeinheit 28 ein Signal 30 in beide Richtungen, so dass es zeitgleich - die Verzögerung durch die Laufzeit im Kabel sei vernachlässigt - an den Endgeräten 26a, 26b ankommt. Die Endgeräte 26a, 26b seien so programmiert, dass sie mit Ankommen des Signals 30 eine Systemzeit auf z.B. 0:00:00,0 setzen und gemeinsam und synchronisiert hoch laufen. Es ist auch möglich, dass die Eingabeeinheit 28 einen Zeitwert mit dem Signal 30 mitliefert, z.B. 1:30:05,0, so dass beide Endgeräte 26a, 26b diesen Zeitwert als Startpunkt des Hochlaufens verwenden. Durch die Eingabeeinheit 28 kann diese Synchronisierung einfach manuell getriggert werden.

Durch das drahtlose, latenzbehaftete Netzwerk 4 geht diese einfache Synchronisierung nicht mehr. Dieser Nachteil kann jedoch durch die Netzwerkgeräte 6a, 6b überwunden werden, ohne dass die Endgeräte 26a, 26b verändert werden müssten. Hierfür werden die Netzwerkgeräte 6a, 6b mit dem zwischen ihnen liegenden Netzwerk 4 zwischen die Endgeräte 26a, 26b geschaltet. Die Eingabeeinheit 28 wird in die Kabelverbindung zwischen einem der Endgeräte 26a, 26b und das zugehörige Netzwerkgerät 6a, 6b geschaltet.

Wie gewohnt wird die Eingabeeinheit 28 manuell bedient, z.B. durch das Drücken eines Knopfs an der Eingabeeinheit 28. Die Eingabeeinheit 28 sendet das Signal 30 aus, das bei der Konfiguration aus FIG 1 zeitgleich am Endgerät 26a und am Netzwerkgerät 6a ankommt, z.B. zum Systemzeitwert T1 = 12:05:07,3 h. Wie oben beschrieben, wird das Signal 32a zur zum Zeitwert T1 + Z an das Endgerät 26b ausgegeben, das auf die mitgeteilte Verzögerungszeit Z synchronisiert und nun bei 0:00:00,2 hoch läuft.

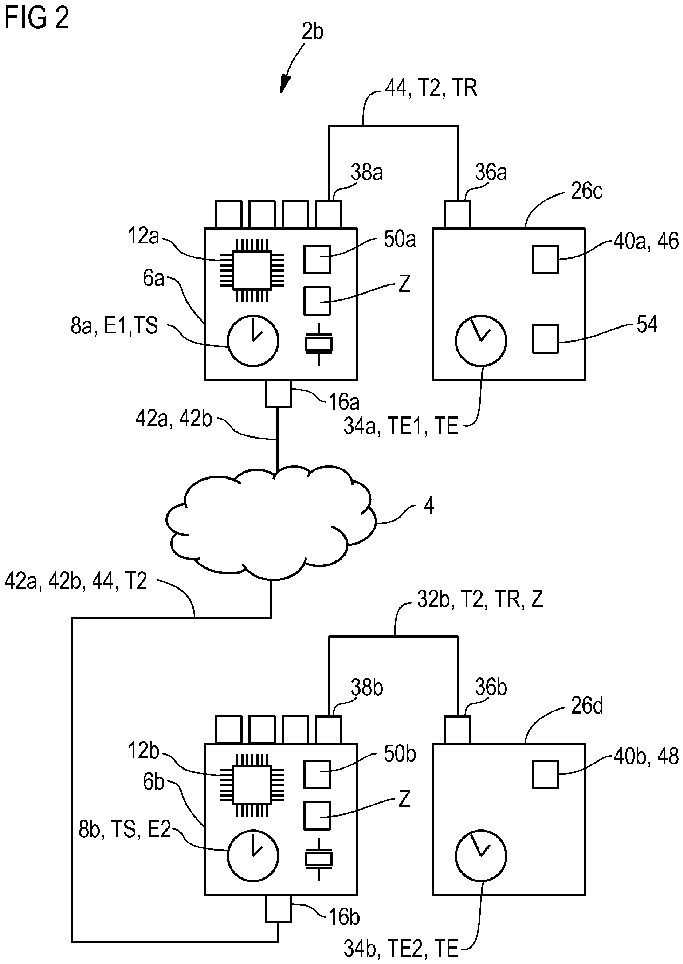

FIG 2 zeigt ein weiteres System 2b mit den Netzwerkgeräten 6a, 6b aus FIG 1 und zwei Endgeräten 26c und 26d. Die Endgeräte 26c und 26d sind als Zeiterfassungsgeräte zur Erfassung von Start- und/oder Zwischen- und/oder Zielzeiten bei einer Sportwettkampfveranstaltung ausgeführt. Die Endgeräte 26c und 26d weisen jeweils eine Endgerätezeituhr 34a bzw. 34b und einen Netzwerkkanal 36a bzw. 36b aus. Die Endgeräte 26c und 26d sind über eine Anbindung ihres jeweiligen Netzwerkkanals 36a, 36b an Netzwerkausgangskanäle 38a bzw. 38b - die im vorliegenden Ausführungsbeispiel als LAN-Schnittstellen ausgeführt sind - der jeweiligen Netzwerkgeräte 6a bzw. 6b angebunden.

Die Netzwerkgeräte 6a, 6b sind kommunikationstransparent, d.h. unter einer Umgehung einer Anpassung der Kommunikationskonfiguration 40a und 40b des Endgeräts 26c bzw. 26d in das Kommunikationsnetzwerk 4 eingebracht und den Endgeräten 26c, 26d vorgeschaltet werden. Die Netzwerkgeräte 6a und 6b sind für die Endgeräte 26c, 26d innerhalb des Netzwerkverkehrs unsichtbar.

Ausgehend von einer noch nicht erfolgten Einrichtung der Kommunikation zwischen den Netzwerkgeräten 6a, 6b, erfolgt das Versenden eines Suchsignals 42a durch das Netzwerkgerät 6a, z.B. durch ein Datensignal 44. Das Datensignal 44 ist ein Signal, das vom Endgerät 26c zur Kommunikation mit dem weiteren Endgerät 26d versendet und vom Netzwerkgerät 6a über dessen Netzwerkausgangskanal 38a erfasst wird. Das Datensignal 44 ist mit einer Sender- und einer Empfängernetzwerkadresse versehen und wird vom Endgerät 26c unverändert an die Empfängernetzwerkadresse versendet. Empfängt das Netzwerkgerät 6a ein Signal, das an das Endgerät 26c adressiert ist, so leitet das Netzwerkgerät 6a das Signal unverändert weiter, so dass dem Endgerät 26c die Weiterleitung an sich verborgen bleibt. Insofern kommuniziert das Netzwerkgerät 6a unter Verwendung einer Netzwerkadresse des Endgeräts 26c als eigene Netzwerkadresse über das Kommunikationsnetzwerk 4.

Das Suchsignal 42a ist ein unadressiertes, also nicht an ein spezifisches Netzwerkgerät gerichtetes, Signal und wird z.B. nach einem Triggern durch das Datensignal 44 des Endgeräts 26c versendet, um geeignete Kommunikationspartner selbsttätig aufzufinden. Das Suchsignal 42a wird durch das Netzwerkgerät 6b empfangen und durch ein Suchsignal 42b erwidert, wobei sich das Netzwerkgerät 6b zum Endgerät 26d zugehörig zu erkennen gibt. Auf diese Weise wird eine Kommunikation zwischen den Netzwerkgeräten 6a, 6b etabliert, die unter anderem zu der im vorherigen Ausführungsbeispiel erwähnten Synchronisation der Systemzeituhren 8a, 8b genutzt werden kann.

Ferner werden die Netzwerkadressen der Endgeräte 26c, 26d, die Bestandteil des Datensignals 44 sind, vom Netzwerkgerät 6a erfasst und gelistet und in einer Datenstruktur 50a, hier in Form einer Tabelle, gespeichert. Nach erfolgter Weiterleitung des Datensignals 44 über das Kommunikationsnetzwerk 4 werden die Netzwerkadressen in der Datenstruktur 50b des Netzwerkgeräts 6b gespeichert.

Im vorliegenden Ausführungsbeispiel wird die Endgerätezeituhr 34b durch das Signal 32b auf eine mit der Endgerätezeituhr 34a gemeinsamen Endgerätezeit TE synchronisiert.

Die Synchronisierung der Systemzeituhren 8a, 8b ist hierfür bereits wie im vorhergehenden Ausführungsbeispiel erläutert erfolgt. Dabei ist es zweckmäßig, wenn in Abhängigkeit einer Eigenschaft E1 und E2 der Systemzeituhren 8a, 8b der Netzwerkgeräte 6a, 6b eine der Systemzeituhren 8a, 8b als Vorgabesystemzeituhr zur Vorgabe der gemeinsamen Systemzeit TS ermittelt wird. Im vorliegenden Ausführungsbeispiel erfolgt diese Ermittlung in Abhängigkeit einer bekannten Ganggenauigkeit der Systemzeituhren 8a, 8b, sodass die Systemzeituhr 8a als Referenzzeituhr ausgewählt wird.

Zur Synchronisierung der Endgerätezeituhren 34 wird durch eine Betätigung eines Auslöseschalters 54 am Endgerät 26c ein Zeitstempel T2, beispielsweise 9:03:56,123 h, erzeugt und an das Netzgerät 6a geleitet. Dabei wird der Wert von T2 anhand der Systemzeit TE1 der Endgerätezeituhr 34a ermittelt. D.h. zum Zeitpunkt der Auslösung des Auslöseschalters 54 zeigt die Endgerätezeituhr 34a eine Endgerätezeit TE2 von 9:03:56,123 h an.

Der Zeitstempel T2 erreicht das Netzwerkgerät 6a näherungsweise instantan zur synchronen Systemzeit TS der Netzwerkgeräte 6, die beispielsweise 12:00:00,000 h beträgt, und wird über das latenzbehaftete Kommunikationsnetzwerk 4 zum Netzgerät 6b weitergeleitet.

Dort trifft T2 latenzzeitbedingt beispielsweise um TS = 12:00:00,049 h bzw. um TE1 = 9:03:56,172 h ein. Unter Verwendung des Verzögerungszeitwerts Z, hier beispielsweise Z = 0,090 s, wird das Signal 32b zum Zeitpunkt TS = 12:00:00,090 h mit dem Informationsinhalt die Endgerätezeituhr 34b auf TE2 = T2 + Z = 9:03:56,213 h zur Synchronisierung ausgegeben, sodass ab diesem Zeitpunkt die Endgerätezeit TE2 der Endgerätezeit TE1 entspricht und eine gemeinsame Endgerätezeit TE vorliegt.

Ferner ist es möglich, dass die synchronisierte Systemzeit TS den Endgeräten 26c, 26d zumindest temporär als Referenzzeit TR zur Verfügung gestellt wird.

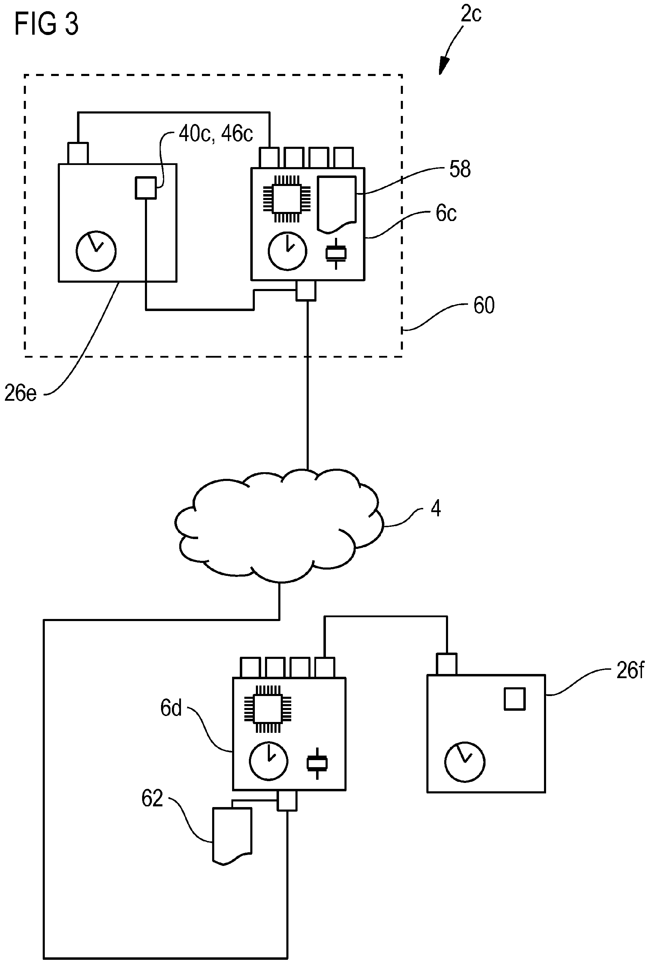

FIG 3 zeigt ein weiteres System 2c mit einem als logische Komponente eines Endgeräts 26e betriebenen Netzwerkgeräts 6c. Dabei agiert das Netzwerkgerät 6c als Repeater. Neben der Netzwerkschicht werden auch darüberliegenden Schichten des Kommunikationsstacks analysiert um beispielsweise eine Routingtabelle 58 zu warten. Im vorliegenden Ausführungsbeispiel wird zumindest ein überwiegender Anteil einer Kommunikation der Kommunikationseinheit 60 auf Basis einer Netzwerkkonfiguration 40c des Endgeräts 26e durchgeführt. D.h. das Netzwerkgerät 6c kommuniziert unter Verwendung einer Netzwerkadresse 46c des Endgeräts 26e als eigene Netzwerkadresse über das Kommunikationsnetzwerk 4.

Dahingegen umfasst das Netzwerkgerät 6d eine von dem Endgerät 26f getrennte Netzwerkkonfiguration 62, mit der das Netzwerkgerät 6d als ein selbständiges Gerät über das Kommunikationsnetzwerk 4 kommuniziert.

### Bezugszeichenliste

- 2a-c: System
- 4: Kommunikationsnetzwerk
- 6a-d: Netzwerkgerät
- 8a, 8b: Systemzeituhr
- 10a, 10b: Quarz
- 12a, 12b: Prozessoreinheit
- 14a, 14b: Kommunikationsschnittstellen
- 16a, 16b: Netzwerkschnittstelle
- 17a, 17b: BUS-Schnittstelle
- 18a, 18b: USB-Schnittstelle
- 20a, 20b: WLAN-Schnittstelle
- 22a, 22b: LAN-Schnittstelle
- 26a-f: Endgerät
- 28: Eingabeeinheit
- 30: Auslösesignal
- 32a, 32b: Signal
- 34a, 34b: Endgerätezeituhr
- 36a, 36b: Netzwerkkanal
- 38a, 38b: Netzwerkausgangskanal
- 40a-c: Netzwerkkonfiguration
- 42a, 42b: Suchsignal
- 44: Datensignal
- 46c: Netzwerkadresse
- 50a, 50b: Datenstruktur
- 54: Auslöseschalter
- 58: Routingtabelle
- 60: Kommunikationseinheit
- 62: Netzwerkkonfiguration
- TS: Systemzeit
- T1: Systemzeitwert
- Z: Verzögerungszeitwert
- TE, TE1, TE2: Endgerätezeit
- T2: Zeitstempel
- TR: Referenzzeit
- E1, E2: Eigenschaft

## Patentansprüche

1. Verfahren zur Zeitmessung im Sport, bei dem ein Startgerät und ein Zielgerät über ein latenzbehaftetes Kommunikationsnetzwerk (4) miteinander synchronisiert werden durch eine zeitgenaue Ausgabe eines Signals (32), bei dem zwei Netzwerkgeräte, die zwischen dem Startgerät und dem Zielgerät angeordnet und über ein latenzbehaftetes, drahtloses Kommunikationsnetzwerk (4) miteinander verbunden sind, eine Kommunikation über das Kommunikationsnetzwerk (4) aufbauen zum Zweck der zeitlichen Synchronisation ihrer Systemzeituhren auf eine Systemzeit, indem eines der Netzwerkgeräte ein Suchsignal in das Kommunikationsnetzwerk sendet, auf das das andere Netzwerkgerät erwidert, die Netzwerkgeräte die Synchronisierung über das latenzbehaftete Kommunikationsnetzwerk übernehmen und eine Systemzeituhr (8a) des ersten Netzwerkgeräts (6a) und eine Systemzeituhr (8b) des zweiten Netzwerkgeräts (6b) über das Kommunikationsnetzwerk (4) auf eine gemeinsame Systemzeit (TS) synchronisieren, wobei ein Systemzeitwert (T1) vom ersten Netzwerkgerät (6a) über das Kommunikationsnetzwerk (4) zum zweiten Netzwerkgerät (6b) geleitet wird und das Signal (32) unter Verwendung des Systemzeitwerts (T1) und eines Verzögerungszeitwerts (Z), der größer als eine Latenz des Kommunikationsnetzwerks (4) ist, durch zumindest eines der Netzwerkgeräte (6) zeitgenau an das Zielgerät des Netzwerks ausgegeben wird.

2. Verfahren nach Anspruch 1,
**dadurch gekennzeichnet,**
**dass** durch das ausgegebene Signal (32) eine Endgerätezeituhr (34b) des Endgeräts (26d) auf eine mit einer Endgerätezeituhr (34a) eines weiteren der Endgeräten (26c) gemeinsame Endgerätezeit (TE) synchronisiert wird.

3. Verfahren nach Anspruch 1 oder 2,
**dadurch gekennzeichnet,**
**dass** eines der Netzwerkgeräten (6) einem Netzwerkkanal (36) eines der Endgeräten (26) kommunikationstransparent sorgeschaltet wird, wobei das Endgerät (26) durch das Netzwerkgerät (6) mittelbar an das Kommunlkationsnetzwerk (4) angebunden. wird.

4. Verfahren nach einem der vorhergehenden Ansprüche,
**dadurch gekennzeichnet,**
**dass** eines der Netzwerkgeräte (6a) unter Verwendung einer Netzwerkadresse eines der Endgeräte (26c) als eigene Netzwerkadresse über das Kommunikationsnetzwerk (4) kommuniziert.

5. Verfahren nach einem der vorhergehenden Ansprüche,
**dadurch gekennzeichnet,**
**dass** der Systemzeitwert (T1) ein Zeitstempel (T2) eines vom Netzwerkgerät (6a) registrierten Auslösesignals, insbesondere eines durch einen Auslöseschalter (54) erzeugten Signals, ist.

6. Verfahren nach einem der vorhergehenden Ansprüche,
**dadurch gekennzeichnet,**
**dass** ein Datensignal (44) von einem Endgerät (26c) an ein weiteres der Endgeräte (26d) versendet wird, wobei die Netzwerkadressen der Endgeräte (26c, 26d) von zumindest einem der Netzwerkgeräte (6a, 6b) gelistet werden.

7. Verfahren nach Anspruch 6,
**dadurch gekennzeichnet,**
**dass** die von zumindest einem der Netzwerkgeräte (6a, 6b) erfassten Netzwerkadressen in einer Datenstruktur (50a, 50b) des Netzwerkgeräts (6a, 6b) gespeichert werden.

8. Verfahren nach einem der vorhergehenden Ansprüche,
**dadurch gekennzeichnet,**
**dass** ein Datensignal (44) von einem Endgerät (26c) an ein weiteres der Endgeräte (26d) versendet und von einem der Netzwerkgeräza (6a, 6b) registriert wird, wodurch ein Versenden eines Suchsignals (42a) zum Auffinden zumindest eines weiteren Netzwerkgeräts (6b) im Kommunikationsnetzwerk (4) getriggert wird.

9. Verfahren nach Anspruch 8,
**dadurch gekennzeichnet,**
**dass** das Suchsignal (42a) von einem weiteren der Netzwerkgeräte (6b) Empfangen, erwidert (42b) und eine Kommunikation über das Kömmunikationsnetzwerk (4) zwischen den Netzwerkgeräten (6a, 6b) etabliert wird.

10. Verfahren nach einem der vorhergehenden Ansprüche,
**dadurch gekennzeichnet,**
**dass** in Abhängigkeit zumindest einer Eigenschaft (E1, E2) der Systemzeituhren (8a, 8b) der Netzwerkgeräte (6a, 6b) eine Systemzeituhr (8a) eines Netzwerkgeräts (6a) als Vorgabesystemzeituhr zur Vorgabe der gemeinsamen Systemzeit (TS) ernittelt wird.

11. System (2) aus zwei Netzwerkgeräten (6) mit jeweils einem Netzwerkeingangskanal (16), eingerichtet zur Anbindung an ein Kommunikationsnetzwerk (4), einem Netzwerkausgangskanal (38), eingerichtet zur Anbindung an einen Netzwerkkanal (36) eines Endgeräts (26), einer Systemzeituhr (8) und einer Prozessoreinheit (12), die zu einer Synchronisierung der Systemzeituhr (8) mit einer Systemzeituhr (8) eines weiteren Netzwerkgeräts (6) auf eine gemeinsame Systemzeit TS über ein latenzbehaftetes Kommunikationsnetzwerk (4) eingerichtet ist, wobei die Prozessoreinheit (12) dazu eingerichtet ist, die Ausgabe eines Signals (32) unter Verwendung der gemeinsamen Systemzeit TS, eines Systemzeitwerts T1 und eines Verzögerungszeitwerts Z über den Netzwerkausgangskanal (38) zu steuern,
**dadurch gekennzeichnet,**
**dass** die Systemzeituhren (8) auf eine gemeinsame Systemzeit TS synchronisiert und die Prozessoreinheiten (12) jeweils zur Durchführung eines Verfahrens nach einem der Ansprüche 1 bis 10 eingerichtet sind.

12. System (2) nach Anspruch 11,
**gekennzeichnet durch** ein Kommunikationsnetzwerk und zumindest zwei Endgeräte (26), die jeweils einen Netzwerkkanal (36) aufweisen und darüber mit dem Netzwerkausgangskanal (38) jeweils eines der Netzwerkgeräte (26) verbunden sind, und die Netzwerkgeräte (26) über ihren jeweiligen Netzwerkeingangskanal (16) mit dem Kommunikationsnetzwerk (4) verbunden sind, wobei die Endgeräze (26) zumindest mittelbar miteinander informationstechnisch verbunden und zur Synchronisation vorbereitet sind.

13. System (2a) nach Anspruch 12,
**dadurch gekennzeichnet,**
**dass** die Endgeräte (26) Zeiterfassungsgeräte zur Erfassung von Start- und/oder Zwischen- und/oder Zielzeiten bei einer Sportwettkampfveranstaltung, insbesondere bei einem Skirennen, sind.

## Claims

1. Method for time measurement in sports for which a start device and a finish device are synchronized with each other via a latency affected communication network (4) by a precisely timed outputting of a signal (32), for which two network devices, that are placed between the start device and the finish device and that are connected by a latency affected wireless communication network (4), build up a communication over the communication network (4) for the purpose of the time synchronization of their system clocks to a system time, while one of the network devices emits a search signal into the communication network to which the other network device answers, the network devices assume the synchronization over the latency affected communication network and synchronize a system clack(8a) of the first network device (6a) and a system clock (8b) of the second network device (6b) over the communication network (4) to a common system time (TS), wherein a system time value (T1) is directed from the first network device (6a) to the second network device (6b) over the communication network (4) and the signal (32) is emitted time precisely to the finish device of the network by at least one of the network devices (6) by using the system time value (T1) and a delay time value (Z) that is higher than a latency of the communication network (4).

2. Method according to claim 1, **characterized in that** a terminal clock (34b) of the terminal device (26d) is synchronized by the emitted signal (32) to a terminal time (TE) common with a terminal clock (34a) of one of the other terminal devices (26c).

3. Method according to claim 1 or 2, **characterized in that** one of the network devices (6) is located upstream from a network channel (36) of one of the terminal devices (26) so as to communicate with transparency, wherein the terminal device (26) is indirectly connected by the network device (6) to the communication network (4).

4. Method according to one of the preceding claims, **characterized in that** one of the network devices (6a) communicates over the communication network (4) by using a network address of one of the terminal devices (26c) as own network address.

5. Method according to one of the preceding claims, **characterized in that** the system time value (T1) is a time stamp (T2) of a trigger signal recorded by the network device (6a), in particular of a signal generated by a trigger switch (54).

6. Method according to one of the preceding claims, **characterized in that** a data signal (44) is sent by a terminal device (26c) to another of the terminal devices (26d), wherein the network addresses of the terminal devices (26c, 26d) are listed by at least one of the network devices (6a, 6b).

7. Method according to claim 6, **characterized in that** the network addresses recorded by at least one of the network devices (6a, 6b) are stored in a data structure (50a, 50b) of the network device (6a, 6a).

8. Method according to one of the preceding claims, **characterized in that** a data signal (44) is sent by a terminal device (26c) to another of the terminal devices (26d) and is recorded by one of the network devices (6a, 6b) so that a sending of a search signal (42a) is triggered to detect at least one further network device (6b) in the communication network (4).

9. Method according to claim 8, **characterized in that** the search signal (42a) is received, answered by another network device (6b) and a communication is built up between the network devices (6a, 6b) over the communication network (4).

10. Method according to one of the preceding claims, **characterized in that**, depending on at feast one property (E1, E2) of the system clocks (8a, 8b) of the network devices (6a, 6b), a system clock (8a) of a network device (6a) is determined as preset system clock for presetting the common system time (TS).

11. System (2) of two network devices (6) with one network input channel (16) each, configured for the connection to a communication network (4), to a network output channel (38) configured for the connection to a network channel (36) of a terminal device (26), a system clock (8) and a processor unit (12) that is configured for a synchronization of the system clock (8) with a system clock (8) of a further network device (6) to a common system time (TS) over a latency affected communication network (4), wherein the processor unit (12) is configured to control the output of a signal (32) over the network output channel (38) by using the common system time (TS), a system time value (T1) and a delay time value (Z), **characterized in that** the system clocks (8) are synchronized to a common system time (TS) and the processor units are respectively configured for carrying out a method according to one of the claims 1 to 10.

12. System (2) according to claim 11, **characterized by** a communication network and at least two terminal devices (26) that have a network channel (36) each and that are connected therewith with the network output channel (38) of respectively one of the network devices (26), and the network devices (26) are connected over their respective network input channel (16) with the communication network (4), wherein the terminal devices (26) are connected at least indirectly with each other in terms of information technology and are prepared for the synchronization.

13. System (2a) according to claim 12, **characterized in that** the terminal devices (26) are time recording devices for recording start times and/or intermediate times and/or finish times for a sports competition event, in particular for a ski race.

## Revendications

1. Procédé pour le chronométrage sportif pour lequel un appareil de départ et un appareil d'arrivée sont synchronisés l'un avec l'autre par l'intermédiaire d'un réseau de communication (4) affecté par la latence par une émission à un moment précis d'un signal (32), pour lequel deux périphériques réseau, qui sont placés entre l'appareil de départ et l'appareil d'arrivée et qui sont reliés l'un à l'autre par un réseau de communication (4) sans fil affecté par la latence, établissent une communication par l'intermédiaire du réseau de communication (4) dans le but de la synchronisation temporelle de leurs horloges système à un temps système, l'un des périphériques réseau émettant un signal de recherche dans le réseau de communication, auquel l'autre périphérique réseau répond, les périphériques réseau prenant en charge la synchronisation par le réseau de communication affecté par la latence et synchronisant une horloge système (8a) du premier périphérique réseau (6a) et une horloge système (8b) du second périphérique réseau (6b) par l'intermédiaire du réseau de communication (4) à un temps système commun (TS), cependant qu'une valeur temps système (T1) est dirigée du premier périphérique réseau (6a) au second périphérique réseau (6b) en passant par le réseau de communication (4) et que le signal (32) est émis à un moment précis à l'appareil d'arrivée du réseau par au moins l'un des périphériques réseau (6) en utilisant la valeur temps système (T1) et une valeur de temps de retard (Z), qui est supérieure à une latence du réseau de communication (4).

2. Procédé selon la revendication 1, **caractérisé en ce qu'**une horloge de terminal (34b) du terminal (26d) est synchronisée par le signal émis (32) à un temps de terminal (TE) commun avec une horloge de terminal (34a) d'un des autres terminaux (26c).

3. Procédé selon la revendication 1 ou 2, **caractérisé en ce que** l'un des périphériques réseau (6) est placé en amont d'un canal de réseau (36) d'un des terminaux (26) pour une communication transparente, le terminal (26) étant lié indirectement au réseau de communication (4) par le périphérique réseau (6).

4. Procédé selon l'une des revendications précédentes, **caractérisé en ce que** l'un des périphériques réseau (6a) communique par le réseau de communication (4) en utilisant une adresse réseau d'un des terminaux (26c) en tant que propre adresse réseau.

5. Procédé selon l'une des revendications précédentes, **caractérisé en ce que** la valeur temps système (T1) est une estampille temporelle (T2) d'un signal de déclenchement enregistré par le périphérique réseau (6a), en particulier d'un signal généré par un commutateur de déclenchement (54).

6. Procédé selon l'une des revendications précédentes, **caractérisé en ce qu'**un signal de données (44) est envoyé par un terminal (26c) à un autre des terminaux (26d), les adresses réseau des terminaux (26c, 26d) étant listées par au moins l'un des périphériques réseau (6a, 6b).

7. Procédé selon la revendication 6, **caractérisé en ce que** les adresses réseau saisies par au moins l'un des périphériques réseau (6a, 6b) sont mémorisées dans une structure de données (50a, 50b) du périphérique réseau (6a, 6b).

8. Procédé selon l'une des revendications précédentes, **caractérisé en ce qu'**un signal de données (44) est envoyé par un terminal (26c) à un autre des terminaux (26d) et est enregistré par l'un des périphériques réseau (6a, 6b) si bien qu'un envoi d'un signal de recherche (42a) est déclenché pour trouver au moins un autre périphérique réseau (6b) dans le réseau de communication (4).

9. Procédé selon la revendication 8, **caractérisé en ce que** le signal de recherche (42a) est reçu par un autre des périphériques réseau (6b), qu'il y est répondu (42b) et qu'une communication est établie entre les périphériques réseau (6a, 6b) par le réseau de communication (4).

10. Procédé selon l'une des revendications précédentes, **caractérisé en ce qu'**en fonction d'au moins une propriété (E1, E2) des horloges système (8a, 8b) des périphériques réseau (6a, 6b) une horloge système (8a) d'un périphérique réseau (6a) est déterminée comme horloge système de consigne pour prédéterminer le temps système commun (TS).

11. Système (2) composé de deux périphériques réseau (6) avec chacun un canal d'entrée réseau (16), aménagé pour la connexion à un réseau de communication (4), un canal de sortie réseau (38), aménagé pour la connexion à un canal réseau (36) d'un terminal (26), une horloge système (8) et une unité de processeur (12) qui est aménagée pour une synchronisation de l'horloge système (8) avec une horloge système (8) d'un autre périphérique réseau (6) à un temps système commun (TS) par un réseau de communication (4) affecté par la latence, l'unité de processeur (12) étant aménagée pour commander la sortie d'un signal (32) en utilisant un temps système commun (TS), une valeur temps système (T1) et une valeur de temps de retard (Z) par le canal de sortie réseau (38), **caractérisé en ce que** les horloges système (8) sont synchronisées à un temps système commun (TS) et les unités de processeur (12) sont aménagées respectivement pour exécuter un procédé selon l'une des revendications 1 à 10.

12. Système (2) selon la revendication 11, **caractérisé par** un réseau de communication et au moins deux terminaux (26) qui présentent chacun un canal réseau (36) et qui sont reliés par celui-ci au canal de sortie réseau (38) de respectivement l'un des périphériques réseau (26) et les périphériques réseau (26) sont reliés au réseau de communication (4) par leur canal d'entrée réseau respectif (16), les terminaux (26) étant reliés au moins indirectement l'un à l'autre sur le plan informatique et étant préparés pour la synchronisation.

13. Système (2a) selon la revendication 12, **caractérisé en ce que** les terminaux (26) sont des appareils de saisie de temps pour saisir des temps de départ et/ou des temps intermédiaires et/ou des temps d'arrivée lors d'un évènement sportif de compétition, en particulier lors d'une course de ski.
